# EUROPÄISCHE PATENTANMELDUNG

(11) **EP 3 340 415 A1**
(43) Veröffentlichungstag der Anmeldung: **27.06.2018**
(21) Anmeldenummer: 17200791.6
(22) Anmeldetag: 09.11.2017
(51) Int. Cl.: H02J 3/14, H02J 3/00

(54) **VERFAHREN ZUM BETRIEB EINES ENERGIE-MANAGEMENT-SYSTEMS EINES GEBÄUDES UND ENERGIE-MANAGEMENT-SYSTEM**

(30) Priorität: 21.12.2016 DE 102016225787
(71) Anmelder: Siemens Schweiz AG, 8047 Zürich (CH)
(72) Erfinder: Baumgärtner, Thomas, 91056 Erlangen (DE); Langemeyer, Stefan, 90489 Nürnberg (DE); Mohsen, Amjad, 91052 Erlangen (DE); Sollacher, Rudolf, 84174 Eching (DE); Diwold, Konrad, 1180 Wien (AT); Einfalt, Alfred, 1210 Wien (AT); Lechner, Daniel, 2170 Poysdorf (AT)
(74) Vertreter: Maier, Daniel Oliver

(57) **Zusammenfassung**

Die Erfindung betrifft ein Verfahren zum Betrieb eines Energie-Management-Systems (12) und ein solches Energie-Management-System (12) eines an ein Energienetz angeschlossenen Gebäudes, welches als Infrastrukturkomponenten eine energetische Last, einen Energieerzeuger und einen Energiespeicher aufweist. Durch diese ist eine Leistungsflexibilität gegeben, von der zumindest ein Teil (58) durch entsprechende Steuerung an andere, an das Energienetz angeschlossene Entitäten bereitstellbar ist. Um ein verbessertes Energie-Management zu ermöglichen, ist es vorgesehen, dass Eingangsdaten empfangen werden, welche einen geplanten nominalen Lastgang des Gebäudes, einen geplanten nominalen Betriebsplan (52) für zumindest eine der Infrastrukturkomponenten und den bereitzustellenden Teil (58) der Leistungsflexibilität angeben. Weiterhin wird für ein vorgegebenes untertägiges Zeitintervall eines jeweils aktuellen Tages (24) eine verfügbare Kurzzeitleistungsflexibilität (66, 74) in Abhängigkeit von dem geplanten nominalen Lastgang und der bereitzustellenden Leistungsflexibilität (58) bestimmt. Schließlich wird die bestimmte verfügbare Kurzzeitleistungsflexibilität (66, 74) an die anderen, an das Energienetz angeschlossenen Entitäten für das vorgegebene Zeitintervall bereitgestellt.

## Beschreibung

Die Erfindung betrifft ein Verfahren zum Betrieb eines Energie-Management-Systems eines an einem Netzanschlusspunkt an ein Energienetz angeschlossenen Gebäudes. Das Gebäude weist dabei als Infrastrukturkomponenten zumindest eine energetische Last, einen Energieerzeuger und einen Energiespeicher auf. Durch die Infrastrukturkomponenten ist eine Leistungsflexibilität, das heißt eine Flexibilität hinsichtlich eines Leistungsbedarfs, gegeben. Zumindest ein Teil dieser Leistungsflexibilität wird durch entsprechende Steuerung der Infrastrukturkomponenten über den Netzanschlusspunkt und somit über das Energienetz an andere, an das Energienetz angeschlossene Entitäten oder Systeme bereitgestellt. Die Erfindung betrifft weiterhin ein entsprechendes Energie-Management-System.

Einrichtungen wie beispielsweise, insbesondere kommerzielle, Gebäude, Großgebäude oder Bauwerke können heutzutage typischerweise über ein Automationssystem, beispielsweise ein Gebäude-Automationssystem verfügen. Ein derartiges Automationssystem kann eine einem Betrieb des Gebäudes zu Grunde liegende Infrastruktur umfassen, zu welcher beispielsweise elektrische und/oder thermische Speicher oder Energiespeicher, Wärmepumpen sowie entsprechende Kommunikations- und/oder Steuerungseinrichtungen zählen können. Ein Aufbau oder eine Funktionsweise eines Gebäude-Automationssystems kann durch mehrere hierarchische Ebenen beschrieben werden. So können beispielsweise in einer Managementebene übergeordnete Funktionen, wie etwa eine Visualisierung der Gebäudeinfrastruktur zusammengefasst und wahrgenommen werden. In einer Automationsebene können einzelne Feldgeräte, welche beispielsweise verteilt in dem Gebäude angeordnete Elemente der Infrastruktur sein können, zusammengeführt und beispielsweise nach ihrer Funktion und/oder ihrer Position gruppiert sein und es können hier beispielsweise solche Gerätegruppen angesteuert werden. Auf einer Feldebene sind die einzelnen Komponenten der Gebäudeinfrastruktur an das System angeschlossen. Ein typischerweise in einem Gebäude-Automationssystem vorgesehenes Teilsystem ist ein Energie-Management-System (BEMS, englisch "Building Energy Management System"). Nach aktuellem Stand der Technik sind Kernfunktionen des Energie-Management-Systems eine energieeffiziente Steuerung der angeschlossenen Infrastrukturkomponenten, ein Schutz der Infrastruktur vor Überlastung und eine Bereitstellung von Komfort oder Komfortfunktionen, wie beispielsweise einer vorbestimmten Innen- oder Raumtemperatur in einzelnen Bereichen oder Räumen des Gebäudes.

Im aktuellen politischen und ökonomischen Umfeld ist es absehbar, dass neue Anforderungen an Energie-Management-Systeme ebenso wie an lokale, regionale und überregionale Energie- und Verteilnetze sowie deren Betreiber gestellt werden. Dies kann beispielsweise Zielsetzungen hinsichtlich einer Reduktion von Treibhausgasemissionen sowie Nachhaltigkeitszertifizierungen, beispielsweise nach den Standards von "Leadership in Energy and Environmental Design" (LEED), Energy Star und ähnlichen betreffen.

Die heutzutage üblichen und bekannten Gebäude-Automationssysteme verfügen nicht über umfassende Energie-Management-Systeme, die allen zukünftigen Anforderungen und Problemstellungen gewachsen sind.

Aufgabe der vorliegenden Erfindung ist es, ein verbessertes Energie-Management in einem Energienetz zu ermöglichen.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in den Zeichnungen angegeben.

Ein erfindungsgemäßes Verfahren dient zum Betrieb eines Energie-Management-Systems eines an einem Netzanschlusspunkt an ein Energienetz angeschlossenen Gebäudes, welches als Infrastrukturkomponenten zumindest eine energetische Last, einen Energieerzeuger und einen Energiespeicher aufweist. Durch die Infrastrukturkomponenten ist eine Leistungsflexibilität gegeben, wobei zumindest ein Teil der Leistungsflexibilität durch entsprechende Steuerung der Infrastrukturkomponenten über den Netzanschlusspunkt an andere, an das Energienetz angeschlossene Entitäten oder Systeme bereitgestellt wird. Um ein verbessertes Energie-Management in dem Energienetz beziehungsweise des Gebäudes zu ermöglichen, umfasst das erfindungsgemäße Verfahren zumindest die im Folgenden genannten Verfahrensschritte. In einem Verfahrensschritt des erfindungsgemäßen Verfahrens erfolgt ein Empfang von Eingangsdaten, welche einen geplanten nominalen Lastgang des Gebäudes an dem Netzanschlusspunkt, einen geplanten nominalen Betriebsplan für zumindest eine der Infrastrukturkomponenten und den bereitzustellenden Teil der Leistungsflexibilität angeben. In einem weiteren Verfahrensschritt des erfindungsgemäßen Verfahrens erfolgt ein Bestimmen zumindest einer in einem vorgegebenen untertägigen Zeitintervall eines jeweils aktuellen Tages verfügbaren Kurzzeitleistungsflexibilität in Abhängigkeit von dem geplanten nominalen Lastgang des Gebäudes in dem vorgegebenen Zeitintervall und der bereitzustellenden Leistungsflexibilität. Die verfügbare Kurzzeitleistungsflexibilität kann auch in Abhängigkeit von dem geplanten nominalen Betriebsplan für die zumindest eine Infrastrukturkomponente bestimmt werden. In einem weiteren Verfahrensschritt des erfindungsgemäßen Verfahrens erfolgt ein Bereitstellen der bestimmten verfügbaren Kurzzeitleistungsflexibilität an andere, an das Energienetz angeschlossene Entitäten oder Systeme für das vorgegebene Zeitintervall.

Der abkürzend verwendete Begriff "Flexibilität" kann eine Leistungsflexibilität und/oder eine Kurzzeitleistungsflexibilität bezeichnen, wie für den Fachmann jeweils aus dem Kontext ersichtlich ist.

Ohne Beschränkung der Allgemeinheit und ohne, dass die Erfindung hierauf eingeschränkt sein soll, wird zur Erläuterung und Veranschaulichung der vorliegenden Erfindung, soweit nicht anders angegeben, im Folgenden ein Elektrizitäts- oder Stromnetz als Beispiel für das Energienetz verwendet. Bei dem Gebäude kann es sich beispielsweise um ein kommerziell betriebenes Gebäude, wie beispielsweise ein Bürogebäude, ein Hochhaus oder dergleichen handeln. Grundsätzlich kann die vorliegende Erfindung jedoch für beliebige Gebäude und Bauwerke eingesetzt oder verwendet werden.

Die Infrastrukturkomponenten sind Teile einer Infrastruktur, insbesondere einer Energie-, Kommunikations- und/oder Steuerungsinfrastruktur, des Gebäudes. Diese Infrastruktur kann neben den genannten Komponenten auch noch weitere Komponenten umfassen, wozu insbesondere Sensoren, Überwachungseinrichtungen, Prüfungseinrichtungen, Datenverarbeitungseinrichtungen, Steuereinrichtungen sowie entsprechende, die Infrastrukturkomponenten miteinander verbindende Leitungen, Kabel und Datenverbindungen zählen können.

Die energetische Last kann beispielsweise ein Beleuchtungssystem, ein HVAC-System (englisch "heating, ventilation and air conditioning") sein. Ebenso kann beispielsweise auch ein an eine entsprechende elektrische Ladestation des Gebäudes angeschlossenes Elektroauto die oder eine Last darstellen. Allgemein kann die energetische Last also jede Art von Verbraucher der entsprechenden in dem Energienetz transportierten Energieart sein.

Der Energieerzeuger kann beispielsweise eine Photovoltaik- oder Windkraftanlage oder dergleichen sein, welche beispielsweise auf oder an dem Gebäude angeordnet sein kann. Die von dem Energieerzeuger bereitgestellte Energie oder Leistung kann in das als Teil der Gebäudeinfrastruktur vorgesehene gebäudeinterne Leitungsnetz eingespeist werden. Es kann also möglich sein, die energetische Last des Gebäudes ganz oder teilweise durch von dem Energieerzeuger des Gebäudes erzeugte oder bereitgestellte Energie beziehungsweise Leistung zu versorgen. Die von dem Energieerzeuger bereitgestellte Energie oder Leistung kann jedoch auch ganz oder teilweise über den Netzanschlusspunkt in das gebäudeexterne Energienetz eingespeist werden. Das Energienetz kann also beispielsweise ein privates oder öffentliches beziehungsweise kommunales, städtisches oder staatliches Netz sein.

Der Energiespeicher des Gebäudes kann beispielsweise eine Batterie oder ein Akkumulator sein. In jedem Fall kann der Energiespeicher je nach einem Lade- oder Füllzustand Energie aus dem Energienetz und/oder der Gebäudeinfrastruktur aufnehmen und/oder Energie an die Gebäudeinfrastruktur und/oder das Energienetz abgeben. Der Energiespeicher kann also beispielsweise als Puffer für Leistungsspitzen dienen.

Einige oder alle der Infrastrukturkomponenten können steuerbar sein. Steuerbare Infrastrukturkomponenten können eine Steuerung, Anpassung oder Veränderung beispielsweise ihrer jeweiligen Leistungsaufnahme und/oder Leistungsabgabe erlauben oder ermöglichen. Dazu können Sie beispielsweise von einem in die Gebäudeinfrastruktur eingebundenen Steuergerät mittels entsprechender Steuersignale angesteuert werden. So kann beispielsweise eine Leistungsabgabe der Photovoltaikanlage reduziert und/oder eine Ladeleistung zum Aufladen einer Traktionsbatterie des an das Gebäude angeschlossenen Elektrofahrzeugs variiert und/oder eine Heiz- oder Klimatisierungsleistung des HVAC-Systems angepasst werden. Hierbei sind selbstverständlich jeweilige technische Restriktionen zu beachten.

Durch die Infrastrukturkomponenten, insbesondere durch die steuerbaren Infrastrukturkomponenten oder aufgrund von deren Steuerbarkeit, besteht insgesamt eine Leistungsflexibilität der Infrastrukturkomponenten, der gesamten Infrastruktur und somit letztlich des Gebäudes. Im Sinne der vorliegenden Erfindung ist der Begriff Leistungsflexibilität so zu verstehen, dass von dem geplanten nominalen Lastgang oder von einem geplanten Energie- oder Leistungsprofil in kontrollierter Form abgewichen werden kann, wenn eine Leistungsflexibilität besteht oder gegeben ist oder vorliegt. Dies ist bezogen auf eine an dem Netzanschlusspunkt anliegende oder über den Netzanschlussunkt fließende, jedenfalls aber an dem Netzanschlusspunkt gemessene oder messbare Leistung. Dabei kann je nach Situation durch eine Erhöhung der über den Netzanschlusspunkt bezogenen Leistung nach oben und/oder durch eine Reduzierung der über den Netzanschlusspunkt bezogenen Leistung nach unten von dem geplanten Lastgang oder Profil abgewichen werden. Entsprechendes gilt auch für einen Rückspeisefall, in dem das geplante oder tatsächliche Leistungsprofil zumindest teilweise oder zeitweise negativ ist.

Je nach Situation kann durch Ausnutzung der Leistungsflexibilität ein jeweiliger Betrag und/oder eine jeweilige Richtung der an dem Netzanschlusspunkt bereitgestellten oder über den Netzanschlusspunkt fließenden Leistung variiert oder angepasst werden. Eine positive Leistungsflexibilität beschreibt dabei die Möglichkeit oder das Potenzial des Gebäudes, einen Leistungsbedarf des Gebäudes an dem Netzanschlusspunkt gegenüber dem nominalen Lastgang zu erhöhen. Eine negative Leistungsflexibilität beschreibt die Möglichkeit oder das Potenzial des Gebäudes, den Leistungsbedarf an dem Netzanschlusspunkt gegenüber dem nominalen Lastgang zu reduzieren. Der Netzanschlusspunkt beschreibt dabei abstrakt oder konkret eine physische Verbindungsstelle oder Übergangsstelle zwischen dem Gebäude oder der Gebäudeinfrastruktur und dem, insbesondere gebäudeexternen, Energienetz. Der Netzanschlusspunkt muss dabei real, das heißt bei einer physischen Umsetzung, nicht notwendigerweise ein einzelner Punkt oder Anschluss sein.

Umfasst das Gebäude beispielsweise eine Photovoltaikanlage oder eine vergleichbare gebäudeintegrierte Energieerzeugungseinheit, so stellt eine jeweilige maximal von dieser bereitstellbare elektrische Leistung eine obere Schranke an Leistung dar, die etwa über einen entsprechenden Inverter in den gebäudeinterne Leitungsnetz eingespeist werden kann. Die maximale Leistung kann etwa durch die zunächst vorhergesagt und letztlich durch die tatsächliche Sonneneinstrahlung bestimmt sein. Um möglichst viel Leistungsflexibilität zur Erhöhung des Energiebedarfs des Gebäudes bereitzustellen, muss der Inverter also mit voller oder maximaler Leistung in das gebäudeinterne Leitungsnetz einspeisen. Um im Gegensatz dazu möglichst viel Leistungsflexibilität zur Reduzierung des Energiebedarfs - oder im Fall einer Rückspeisung von Energie in das gebäudeexterne Energienetz zur Erhöhung dieser Rückspeisung - bereitzustellen, muss der Inverter auf 0% Einspeiseleistung gedrosselt sein. Bei einem Betrieb der Photovoltaikanlage oder des Inverters zwischen 0% und 100% Einspeiseleistung kann sowohl Flexibilität zur Reduzierung als auch zur Erhöhung des Energiebedarfs des Gebäudes bereitgestellt werden.

Die anderen, an das Energienetz angeschlossenen Entitäten oder Systeme können beispielsweise andere Gebäude, Einrichtungen eines Energieversorger, Einrichtungen eines Bilanzkreises oder eines Bilanzkreisverantwortlichen, Einrichtungen eines Verteilnetzbetreibers, Einrichtungen eines Übertragungsnetzbetreibers oder dergleichen sein.

Die Eingangsdaten, welche den Lastgang, den Betriebsplan und den bereitzustellenden Teil der Leistungsflexibilität angeben, können beispielsweise von einer Datenverarbeitungseinrichtung des Energie-Management-Systems oder eines Subsystems des Energie-Management-Systems empfangen werden.

Die als Eingangsgrößen für weitere Betrachtungen dienenden Eingangsdaten können dem erfindungsgemäßen Energie-Management-System beispielsweise von einer externen Einrichtung bereitgestellt werden. Alternativ oder zusätzlich können die Eingangsdaten von einem weiteren Subsystem oder Modul des Energie-Management-Systems ermittelt und/oder bereitgestellt werden. Das weitere Modul kann beispielsweise ein Planungsmodul sein.

Der geplante nominale Lastgang des Gebäudes am Netzanschlusspunkt gibt effektiv einen zeitlichen Verlauf des Leistungsbedarfs des Gebäudes einschließlich seiner gesamten Infrastruktur an. Dieser Leistungsbedarf kann dabei zeitweise positiv und zeitweise negativ oder auch gleich null sein. Dementsprechend kann es also notwendig und auch geplant sein, zumindest während bestimmter Zeitbereiche oder Zeitintervalle eine bestimmte Leistung oder Energiemenge über das Energienetz zu beziehen. Der nominale Lastgang des Gebäudes kann also für jeden Zeitpunkt oder jedes Zeitintervall eine planungsgemäß zu beziehende oder einzukaufende Energiemenge angeben.

Der geplante nominale Betriebsplan beschreibt für die jeweilige Infrastrukturkomponente den geplanten oder voraussichtlichen - ebenfalls positiven oder negativen - Leistungsbedarf dieser Infrastrukturkomponente im zeitlichen Verlauf. Dabei können sowohl jeweilige technische Restriktionen als auch Umgebungsbedingungen, wie beispielsweise eine Sonnenscheindauer, während der die Photovoltaikanlage beschienen wird und Strom liefern kann, sowie weitere Größen und Parameter berücksichtigt werden.

Der bereitzustellende Teil der Leistungsflexibilität kann beispielsweise diejenige Leistungsflexibilität angeben, welche bereits verplant ist. Beispielsweise kann diese bereitzustellende Leistungsflexibilität bereits am Vortag von einer der ebenfalls an das Energienetz angeschlossenen Entitäten gebucht oder reserviert worden sein. Insbesondere kann der bereitzustellende Teil der Leistungsflexibilität während eines bestimmten Zeitintervalls oder Zeitraumes bereitzustellen sein. Die einzelnen Infrastrukturkomponenten müssen also derart angesteuert werden, dass sich insgesamt oder durch deren Zusammenwirken in Summe die bereits verplante Leistungsflexibilität zum jeweils entsprechenden Zeitpunkt tatsächlich bereitstellen, das heißt realisieren und nutzen lässt. Beispielsweise kann es dazu notwendig sein, bereits mit entsprechendem zeitlichem Vorlauf den Energiespeicher bis zu einem gewissen Grad oder Ladezustand aufzuladen oder zu entleeren. Dabei können auch Unsicherheiten berücksichtigt werden. Unsicherheiten können beispielsweise zufällige oder nicht vorhersagbare Schwankungen im Leistungsbedarf des Gebäudes oder einzelner Infrastrukturkomponenten und/oder nicht vorhersagbare Schwankungen in der Energieproduktion oder Leistungsbereitstellung des Gebäudes oder einzelner Infrastrukturkomponenten sein. Die Unsicherheiten sind also mögliche Abweichungen von dem geplanten nominellen Lastgang und/oder Betriebsplan. Am Beispiel der Photovoltaikanlage kann beispielsweise eine von der entsprechenden Vorhersage abweichende Sonnenscheindauer zu einer derartigen Schwankung oder Abweichung führen, was dementsprechend durch eine Unsicherheit beschrieben werden kann.

Ein untertägiges Zeitintervall des jeweils aktuellen Tages kann beispielsweise ein Zeitraum von vier Stunden oder einer Stunde oder beispielsweise auch einer Viertelstunde an demselben Tag oder innerhalb desselben Tages sein. Die Kurzzeitleistungsflexibilität, welche abkürzend und auch als Kurzzeitflexibilität bezeichnet werden kann, gilt also jeweils für ein derartiges untertägiges Zeitintervall. Das jeweilige Zeitintervall gibt dabei insbesondere nicht nur eine bestimmte Zeitdauer, sondern auch einen konkreten Startzeitpunkt oder Beginn dieser Zeitdauer an. Ein bestimmtes untertägiges Zeitintervall kann also beispielsweise spezifisch die Viertelstunde von 15:30 Uhr bis 15:45 Uhr desselben Tages sein.

Das Bereitstellen von Leistungsflexibilität oder Kurzzeitleistungsflexibilität bedeutet dabei ein tatsächliches technisches Verfügbarmachen durch entsprechende Ansteuerung einer oder mehrerer der Infrastrukturkomponenten des Gebäudes. Die jeweils bereitgestellte Flexibilität kann dann tatsächlich beansprucht oder abgerufen, das heißt also ganz oder teilweise ausgenutzt werden. Bei einem Abruf oder einer Beanspruchung oder Ausnutzung von bereitgestellter positiver Flexibilität kann also beispielsweise die bereitzustellende Energiemenge während des bestimmten Zeitintervalls in das Energienetz eingespeist werden. Im Gegenzug kann bei einer Beanspruchung von bereitgestellter negativer Flexibilität in dem bestimmten Zeitintervall eine entsprechende Leistung, über das bestimmte Zeitintervall hinweg - also insgesamt eine entsprechende Energiemenge - bezogen werden. Diese bezogene Energiemenge kann dann beispielsweise in dem dafür vorgesehenen Energiespeicher des Gebäudes gespeichert oder zwischengespeichert werden. Ebenso kann es beispielsweise auch möglich sein, die bezogene Leistung zum Betrieb der Last, beispielsweise des HVAC-Systems des Gebäudes, zu verwenden.

Durch die vorliegende Erfindung kann vorteilhaft auch zukünftigen Herausforderungen, Aufgaben und Problemstellungen, die sich für ein Energie-Management-System eines Gebäudes ergeben werden, begegnet werden. So kann die vorliegende Erfindung beispielsweise auch zum Management von erneuerbaren Energiequellen, wie etwa von Photovoltaikanlagen, von elektrischen Speichern und von steuerbaren Lasten, wie zum Beispiel zum Laden von Elektroautos, verwendet werden. Die vorliegende Erfindung kann auch dazu verwendet werden oder dazu beitragen, einen Energieeinkauf kostenoptimiert durchzuführen, den geplanten nominalen Lastgang des Gebäudes einzuhalten und/oder eine im Rahmen der jeweils verfügbaren Leistungsflexibilität und/oder Kurzzeitleistungsflexibilität angeforderte Änderungen des tatsächlichen Lastgangs trotz Störungen, Unsicherheiten und/oder unvorhergesehener Ereignisse, wie zum Beispiel einer Abweichung der realen von den vorhergesagten Wetterbedingungen, durchzuführen. Ebenso kann die vorliegende Erfindung vorteilhaft und nutzbringend im Rahmen einer, insbesondere automatisierten, Energiemarkt-Teilnahme durch eine Vermarktung insbesondere der bestimmten verfügbaren Kurzzeitflexibilität vorteilhaft verwendetet oder eingesetzt werden. Durch die vorliegende Erfindung kann dabei auch die Teilnahme an bestimmten Energiemärkten erst ermöglicht werden.

Durch die vorliegende Erfindung können vorteilhaft die Problemstellungen einer Ermittlung und einer Vermarktung von verfügbarer Kurzzeitflexibilität gelöst werden. Insbesondere kann die vorliegende Erfindung vorteilhaft eine Interaktion bei der Verwertung von Leistungsflexibilität und von Kurzzeitleistungsflexibilität, welche also auf verschiedenen Zeitskalen oder für verschiedene Zeithorizonte betrachtet werden, verbessern, was insbesondere eine Einbindung des Gebäudes in einen Regelenergiemarkt betrifft. So kann durch die vorliegende Erfindung ein Energie-Managementsystem beziehungsweise ein mit einem solchen ausgestattetes Gebäude vorteilhaft gleichzeitig in verschiedene Energiemärkte beziehungsweise Energieverteilungsmechanismen oder -systeme eingebunden oder einbezogen werden, da gleichzeitig unterschiedliche externe Entitäten oder Systeme auf verschiedenen Zeitskalen - beispielsweise tageweise einen Tag im Voraus geplant einerseits und für untertägige Zeitintervalle andererseits - mit Leistungsflexibilität beziehungsweise Kurzzeitleistungsflexibilität versorgt werden können. Durch eine Anwendung der Erfindung kann also beispielsweise eine Teilnahme des Gebäudes an einem Regelenergiemarkt, an einem Intraday-Markt, an einem Bilanzkreis-Management und an einem Netzdienstleistungsmarkt auf Verteilnetzebene ermöglicht werden. Vorteilhaft kann durch die vorliegende Erfindung also eine elektrische und energetische Stabilität, eine Ausfallsicherheit und eine dynamische Anpassungs- und/oder Reaktionsfähigkeit des Energienetzes erhöht werden.

Weiterhin können durch die vorliegende Erfindung vorteilhaft eine Effektivität und/oder eine Effizienz von regenerativen Energiequellen beziehungsweise von deren Einsatz verbessert werden. Dies kann beispielsweise dadurch erreicht werden, dass von einem regenerativen Energieerzeuger des Gebäudes bereitgestellte Leistung planbar und gezielt sowie bedarfsgerecht dem Energienetz oder an dieses angeschlossenen Entitäten bereitgestellt werden kann, wenn diese Leistung beispielsweise von dem Gebäude selbst nicht benötigt wird. Somit kann vorteilhaft gegebenenfalls ein Gesamtvolumen von Treibhausgasemissionen aller an das Energienetz angeschlossenen Entitäten und Einrichtungen reduziert werden.

In weiterer vorteilhafter Ausgestaltung der vorliegenden Erfindung ist es vorgesehen, dass zum Bereitstellen der Leistungsflexibilität und/oder der Kurzzeitleistungsflexibilität eine steuerbare Last des Gebäudes gesteuert wird in Abhängigkeit von zumindest einer Komfortbedingung. Steuerbare Lasten des Gebäudes oder in dem Gebäude können beispielsweise in unterschiedlichen Betriebsmodi und/oder mit unterschiedlichem Energieverbrauch betrieben werden. Dabei müssen technische Restriktionen, wie beispielsweise eine maximale Ladeleistung der Ladeeinrichtung oder Ladesäule beim Laden eines an diese angeschlossenen Elektroautos oder eine maximale Leistungsaufnahme des HVAC-Systems, berücksichtigt werden. Besonders vorteilhaft ist es jedoch, wenn zusätzlich auch eine Komfortbedingung berücksichtigt wird. Eine Komfortbedingung kann beispielsweise eine einzuhaltende maximale Ladezeit des Elektroautos sein, sodass dieses während einer vorgesehenen Standzeit, beispielsweise während einer Arbeitszeit eines Besitzers des Elektroautos, vollständig aufgeladen wird. Eine Komfortbedingung kann auch ein Einhalten eines bestimmten Temperaturbereiches zwischen einer minimalen und einer maximalen Temperatur in von dem HVAC-System versorgten Räumen des Gebäudes sein. Hierbei kann jeweils ein Spielraum bei der Steuerung der Lasten bestehen, wodurch also auch Flexibilität, insbesondere Kurzzeitflexibilität, gegeben sein kann. Beispielsweise kann eine Flexibilität zur Erhöhung des Leistungs- oder Energiebedarfs des Gebäudes durch eine mögliche Erhöhung der Leistungsaufnahme einer Heizeinrichtung des HVAC-Systems bereitgestellt oder ausgenutzt werden, solange die gemäß der vorgegebenen Komfortbedingung vorgesehene maximale Raumtemperatur in zumindest einem Raum des Gebäudes nicht erreicht ist. Entsprechend kann eine Flexibilität zur Reduzierung des Energiebedarfs des Gebäudes bereitgestellt oder ausgenutzt werden. Beispielsweise kann eine Klimaanlage zur Kühlung eines oder mehrerer Räume ausgeschaltet oder in ihrer Leistungsaufnahme reduziert oder gedrosselt werden, solange die gemäß der Komfortbedingung vorgesehene maximale Raumtemperatur in zumindest einem Raum des Gebäudes nicht erreicht ist. Als Komfortbedingung kann aber beispielsweise auch ein Aufrechterhalten von jeweils optimalen Umgebungs- und/oder Betriebsbedingungen für technische Anlagen, Einrichtungen oder Geräte des Gebäudes verstanden werden. Auf diese Weise kann beispielsweise eine Effektivität und/oder Effizienz und/oder eine Lebensdauer des entsprechenden Gerätes oder der entsprechenden technischen Anlage oder Einrichtung erhöht werden, während gleichzeitig Flexibilität, insbesondere Kurzzeitflexibilität, an das Energienetz beziehungsweise die Entitäten bereitgestellt wird oder werden kann. Somit kann also vorteilhaft ein ökonomisch, ökologisch und technisch optimaler Betriebspunkt nicht nur aller an das Energienetz angeschlossenen Entitäten, sondern auch deren individueller technischer Einrichtungen erreicht werden.

In weiterer vorteilhafter Ausgestaltung der vorliegenden Erfindung ist es vorgesehen, dass die in Abhängigkeit von der zumindest einer Komfortbedingung gesteuerte steuerbare Last des Gebäudes eine klimatechnische Einrichtung umfasst und als Komfortbedingung ein Halten einer Temperatur und/oder einer Luftfeuchtigkeit und/oder einer Luftqualität in einem Bereich des Gebäudes innerhalb eines vorgegebenen Werteintervalls dient. Als Maß für die Luftqualität kann beispielsweise eine Sauerstoff- und/oder eine Kohlenstoffdioxidkonzentration verwendet werden. Der Bereich des Gebäudes kann beispielsweise ein bestimmter Raum oder eine bestimmte Gruppe oder Menge von Räumen sein. Hierdurch kann vorteilhaft ein Komfort, ein Wohlbefinden, ein Gesundheitsniveau und/oder ein Leistungsniveau der sich jeweils in dem Bereich aufhaltenden Personen erhöht oder verbessert werden.

In weiterer vorteilhafter Ausgestaltung der vorliegenden Erfindung ist es vorgesehen, dass die verfügbare Kurzzeitleistungsflexibilität an einen Aggregator bereitgestellt wird, der jeweilige verfügbare Kurzzeitleistungsflexibilitäten mehrerer an das Energienetz angeschlossener Gebäude oder Entitäten bündelt. Dadurch kann ermöglicht werden, dass durch die Einbindung des Gebäudes beziehungsweise der Gebäude in dem Energienetz verfügbare Flexibilität, insbesondere Kurzzeitflexibilität, zur Verbesserung der Stabilität des Energienetzes und/oder einer Qualität der in dem Energienetz verfügbaren Energie oder Leistung mit insgesamt möglichst geringem und/oder möglichst gut beherrschbarem Planungs- und Verwaltungs- und Steuerungsaufwand genutzt werden kann. Beispielsweise ist es in bisherigen Systemen oder Energienetzen vorgesehen, dass an entsprechenden Energieverteilungsmechanismen oder Energiemärkten nur solche Teilnehmer oder Entitäten teilnehmen oder mitwirken können, welche bestimmte Mindestmengen von Leistung oder Flexibilität bereitstellen können. Durch diese Beschränkung ist derzeit eine direkte Teilnahme eines einzelnen Gebäudes an diesen Mechanismen und Märkten typischerweise nicht möglich. Durch die Bereitstellung der Kurzzeitleistungsflexibilität des Gebäudes an den Aggregator wird also indirekt die Teilnahme des einzelnen Gebäudes ermöglicht, da der Aggregator die jeweiligen Mindestmengen liefern kann. Der Aggregator kann beispielsweise als virtuelles Kraftwerk implementiert werden.

In weiterer vorteilhafter Ausgestaltung der vorliegenden Erfindung ist es vorgesehen, dass die verfügbare Kurzzeitleistungsflexibilität mittels eines physikalischen und/oder datengestützten Modells zumindest einer, bevorzugt mehrerer oder aller, Infrastrukturkomponenten, insbesondere der steuerbaren Infrastrukturkomponenten, des Gebäudes bestimmt wird. Mit anderen Worten können also das jeweilige Verhalten und/oder die jeweiligen Eigenschaften der Infrastrukturkomponente oder der Infrastrukturkomponenten durch das Modell beschrieben oder charakterisiert sein. Dadurch kann vorteilhaft auf eine aufwändige Sensorik und Überwachung der jeweiligen modellierten Infrastrukturkomponente verzichtet werden. Dies kann beispielsweise dann besonders vorteilhaft sein, wenn die vorliegende Erfindung im Rahmen einer Nach- oder Aufrüstung eines bestehenden Gebäudes verwendet werden soll. Hier kann dann gegebenenfalls auf einen aufwendigen Einbau zusätzlicher Datenleitungen von der jeweiligen Infrastrukturkomponente zu einer Datenverarbeitungseinrichtung des Gebäudes beziehungsweise des Energie-Management-Systems verzichtet werden.

Das jeweilige physikalischen und/oder datengestützten Modell kann beispielsweise ein Kennfeld umfassen, in welchem verschiedene Betriebs- und/oder Situationsparameter angegeben oder verwertet sind. Es kann dabei jeweils ein Modell für eine einzige Infrastrukturkomponente vorgesehen sein und/oder es kann eine Gruppe von mehreren Infrastrukturkomponenten und/oder die gesamte Infrastruktur des Gebäudes durch ein einziges Modell beschrieben sein. Durch die modellbasierte Bestimmung der Kurzzeitleistungsflexibilität kann diese vorteilhaft besonders gut und zuverlässig geplant werden. Ein weiterer Vorteil der Verwendung jeweiliger Modelle ist es, dass beispielsweise auch bei einem Ausfall oder einer Störung einer jeweiligen Sensorik oder Überwachungseinrichtung durch das jeweilige Modell eine Rückfalldatenquelle zur Verfügung steht und somit die jeweilige Kurzzeitflexibilität auch weiterhin bestimmt, bereitgestellt und ausgenutzt werden kann. Damit wird also insgesamt die Robustheit des Energie-Management-Systems und des erfindungsgemäßen Verfahrens verbessert. Eine möglichst große Robustheit und Zuverlässigkeit ist insbesondere aufgrund der besonderen Wichtigkeit und Relevanz von Energienetzen in der heutigen Welt von besonderer Bedeutung.

In weiterer vorteilhafter Ausgestaltung der vorliegenden Erfindung ist es vorgesehen, dass zur Bestimmung der verfügbaren Kurzzeitleistungsflexibilität ein nicht in Anspruch genommener Anteil der bereitgestellten Leistungsflexibilität berücksichtigt wird. Zusätzlich oder alternativ ist es vorgesehen, dass zur Bestimmung der verfügbaren Kurzzeitleistungsflexibilität zumindest ein Betriebsparameter zumindest einer Infrastrukturkomponente gemessen und eine Abweichung zwischen dem entsprechenden Messwert und einem jeweiligen, gemäß dem geplanten nominalen Betriebsplan erwarteten Wert berücksichtigt wird. Nicht in Anspruch genommene bereitgestellte Leistungsflexibilität kann beispielsweise bereits am Vortag reserviert und somit verplant, dann jedoch freigegeben worden und/oder in dem entsprechenden Zeitintervall nicht abgerufen worden sein. Beispielsweise kann in dem Energiespeicher des Gebäudes eine bestimmte Energiemenge zur Abgabe an das Energienetz vorgehalten worden sein, die dann tatsächlich von der entsprechenden Entität des Energienetzes doch nicht benötigt wird. Diese nicht benötigte und daher nicht abgerufene Energiemenge steht dann also für denselben Tag, für den sie zunächst als am Vortag reservierte Leistungsflexibilität bereitgestellt worden ist, als Kurzzeitflexibilität zur Verfügung. Dieses Beispiel verdeutlicht, dass das tatsächliche Volumen der jeweils verfügbaren Kurzzeitflexibilität - anders als die bereitzustellende Leistungsflexibilität - nicht bereits am Vortag bekannt ist.

Durch die vorliegende Erfindung wird also vorteilhaft und auf untertägigen Zeitskalen dynamisch die effiziente Nutzung der tatsächlich verfügbaren Kurzzeitflexibilität ermöglicht. Dadurch kann vorteilhaft die Effizienz und Stabilität des Energienetzes sowie die Auslastung oder Nutzung der einzelnen Infrastrukturkomponenten des Gebäudes optimiert werden.

Als Betriebsparameter kann beispielsweise eine Auslastung des Energieerzeugers des Gebäudes gemessen werden. Die Auslastung beziehungsweise der Betriebsparameter kann dabei durch unvorhergesehene Ereignisse beeinflusst werden, sodass sich in entsprechend unvorhersehbarer Art und Weise kurzfristig und dynamisch eine Veränderung der tatsächlich verfügbaren Kurzzeitflexibilität ergeben kann. Je mehr und je genauer oder engmaschiger der oder die Betriebsparameter gemessen werden, desto präziser kann vorteilhaft die tatsächlich verfügbare Kurzzeitflexibilität bestimmt werden. Auch hierdurch kann also vorteilhaft beispielsweise die Auslastung der jeweiligen Infrastrukturkomponente verbessert oder optimiert werden. Eine Optimierung der Auslastung kann dabei beispielsweise auch hinsichtlich einer erhöhten Lebensdauer der jeweiligen Infrastrukturkomponente erfolgen, sodass also nicht zwangsläufig immer eine maximale Auslastung angestrebt sein muss.

Es kann auch vorgesehen sein, dass nicht nur die verfügbare Kurzzeitflexibilität sondern jeweils auch die gesamte Leistungsflexibilität bestimmt wird. Die entsprechenden Daten oder Werte der verfügbaren und gesamten Flexibilität können beispielsweise über eine entsprechende Kommunikationsschnittstelle des Energie-Management-Systems und/oder des Gebäudes einer oder mehrerer der an das Energienetz angeschlossenen Entitäten bereitgestellt werden. Insbesondere die gesamte Flexibilität, das heißt also einschließlich der bereits verplanten Leistungs- und/oder Kurzzeitleistungsflexibilität, kann vorteilhaft so als Notfallflexibilität bekannt gemacht werden. Diese Notfallflexibilität kann dann vorteilhaft beispielsweise zur Verhinderung eines vollständigen oder teilweisen Ausfalls des Energienetzes, beispielsweise eines Blackouts, genutzt werden. Dazu kann eine entsprechende Priorisierung von Anfragen zur Nutzung der gesamten Leistungsflexibilitäten zur Vermeidung von Netzausfällen vorgesehen sein. Solche Anfragen können etwa dann priorisiert werden, wenn durch die Bereitstellung und Nutzung der bereits von anderer Stelle reservierten Leistungsflexibilität etwa ein Lastabwurf eines Verteilernetzes oder eines Verteilnetzbetreibers (DSO, englisch "Distribution System Operator") vermieden werden kann.

In weiterer vorteilhafter Ausgestaltung der Erfindung ist es vorgesehen, dass das Gebäude zumindest eine, bevorzugt mehrere, steuerbare Infrastrukturkomponenten umfasst und die Leistungsflexibilität und/oder die Kurzzeitleistungsflexibilität zumindest für jede steuerbare Infrastrukturkomponente individuell bestimmt wird. Zusätzlich zu diesen einzelnen Flexibilitäten können dabei auch die gesamte Leistungsflexibilität und/oder die gesamte Kurzzeitleistungsflexibilität des Gebäudes und/oder der gesamten Infrastruktur des Gebäudes bestimmt werden. Die jeweiligen von gegebenenfalls vorhandenen nicht steuerbaren Infrastrukturkomponenten des Gebäudes bereitgestellten und/oder verwendeten Leistungen können eine unveränderliche oder vorgegebene Grundlast des Gebäudes darstellen oder definieren. Durch die gezielte Bestimmung der Flexibilität der steuerbaren Infrastrukturkomponenten kann somit vorteilhaft die Anzahl der bei dieser Bestimmung zu berücksichtigenden Infrastrukturkomponenten und damit auch die Datenmenge und der Berechnungsaufwand minimiert werden.

Durch die Bestimmung der einzelnen oder individuellen Flexibilität, das heißt also der jeweiligen einzelnen Beiträge der einzelnen steuerbaren Infrastrukturkomponenten zu der gesamten Leistungsflexibilität und/oder zu der gesamten Kurzzeitleistungsflexibilität, kann vorteilhaft eine besonders genaue, bedarfs- und anforderungsgerechte sowie hinsichtlich eines oder mehrerer vorgegebener Kriterien optimierte Verwendung oder Ausnutzung der jeweiligen verfügbaren Flexibilität erzielt werden. Beispielsweise kann es vorgesehen sein, angeforderte Kurzzeitleistungsflexibilität nicht gleichmäßig auf alle steuerbaren Infrastrukturkomponenten aufzuteilen oder gleichmäßig durch alle steuerbaren Infrastrukturkomponenten bereitzustellen. Stattdessen kann es vorgesehen sein, beispielsweise je nach individueller Auslastung der steuerbaren Infrastrukturkomponenten, eine oder mehrere von diesen stärker oder weniger stark zur Bereitstellung der angeforderten Kurzzeitleistungsflexibilität zu beanspruchen. Hierdurch können beispielsweise ein Temperaturmanagement und/oder eine Lebensdauer und/oder eine Haltbarkeit der einzelnen Infrastrukturkomponenten verbessert werden.

In weiterer vorteilhafter Ausgestaltung der vorliegenden Erfindung ist es vorgesehen, dass die Leistungsflexibilität und/oder die Kurzzeitleistungsflexibilität über ein als das Energienetz fungierendes Verteilnetz für Elektrizität und/oder Wärme und/oder Kälte und/oder Dampf und/oder Druckluft und/oder Gas bereitgestellt wird. Mit anderen Worten kann also nicht nur elektrische Leistungsflexibilität und/oder elektrische Kurzzeitleistungsflexibilität bestimmt und bereitgestellt werden, sondern alternativ oder zusätzlich entsprechende Flexibilitäten in nicht-elektrischen Energieformen. Die vorliegende Erfindung kann also - ganz allgemein - für ein Energie-Management oder Energie-Management-System eingesetzt werden. Vorteilhaft wird also durch das erfindungsgemäße Energie-Management-System und das erfindungsgemäße Verfahren ein flexibel in verschiedenen Anwendungsbereichen einsetzbarer Mechanismus angegeben, welcher vorteilhaft beispielsweise zur Optimierung eines Einkaufs und/oder einer Bereitstellung von Flexibilitäten auf unterschiedlichen Zeitskalen in unterschiedlichen Situationen und Systemen eingesetzt werden kann. Somit wird eine Vereinheitlichung im Betrieb der jeweiligen Systeme oder Energienetze ermöglicht, was vorteilhaft zu einer einfacheren und sichereren Handhabung und Benutzung beitragen kann.

Ein erfindungsgemäßes Energie-Management-System für ein an ein Energienetz angeschlossenes Gebäude umfasst eine Datenverarbeitungseinrichtung, welche eine Datenschnittstelle zum Empfang von Eingangsdaten und zum Ausgeben von Steuersignalen an zumindest eine Infrastrukturkomponente des Gebäudes aufweist. Das erfindungsgemäße Energie-Management-System ist dabei zum Durchführen zumindest einer Ausführungsform des erfindungsgemäßen Verfahrens eingerichtet und ausgebildet. Das bedeutet, dass das erfindungsgemäße Energie-Management-System nicht lediglich die abstrakte oder allgemeine Eignung zur Durchführung des erfindungsgemäßen Verfahrens aufweist, sondern konkret in entsprechender Art und Weise gestaltet ist. Beispielsweise kann die Datenverarbeitungseinrichtung eine Speichereinrichtung umfassen, in welcher ein Programmcode abgelegt ist, welcher die jeweiligen zur Durchführung des erfindungsgemäßen Verfahrens notwendigen Verfahrensschritte codiert oder repräsentiert. Das erfindungsgemäße Energie-Management-System oder dessen Datenverarbeitungseinrichtung kann auch eine Kommunikationsschnittstelle oder ein Kommunikationsinterface, beispielsweise gemäß IEC TC57 WG21, aufweisen. Hierüber kann beispielsweise eine Kommunikation mit den anderen an das Energienetz angeschlossenen Entitäten ablaufen.

Die bisher und im Folgenden angegebenen Eigenschaften und Weiterbildungen des erfindungsgemäßen Verfahrens sowie die entsprechenden Vorteile sind jeweils sinngemäß auf das erfindungsgemäße Energie-Management-System und/oder zur Durchführung des erfindungsgemäßen Verfahrens verwendete oder verwendbare Bauteile und Einrichtungen übertragbar und umgekehrt. Aus diesem Grund wird vorliegend auf eine jeweilige explizite Ausformulierung jedes Aspektes sowohl für das erfindungsgemäße Verfahren als auch für das erfindungsgemäße Energie-Management-System verzichtet.

Weitere Merkmale, Einzelheiten und Vorteile der Erfindung ergeben sich aus der nachfolgenden Beschreibung eines bevorzugten Ausführungsbeispiels sowie anhand der Zeichnungen. Dabei zeigen:
- FIG 1: ein schematisches Interaktionsschema zur Veranschaulichung von Funktionalitäten eines Energie-Management-Systems;
- FIG 2: eine schematische Veranschaulichung einer zeitlichen Entwicklung eines Ladezustands eines mit einem Energie-Management-System gekoppelten Energiespeichers mit bereitzustellender Leistungsflexibilität;
- FIG 3: eine schematische Veranschaulichung der zeitlichen Entwicklung aus FIG 2 mit zusätzlicher Kurzzeitflexibilität, welche durch einen Wechsel der betrachteten Zeitskala verfügbar ist; und
- FIG 4: eine schematische Veranschaulichung der zeitlichen Entwicklung aus FIG 2 für ein Szenario mit vollständigem Abruf der bereitzustellenden Flexibilität und mit zusätzlicher Kurzzeitflexibilität.

In den FIG sind gleiche, funktionsgleiche oder einander entsprechende Elemente jeweils mit den gleichen Bezugszeichen gekennzeichnet.

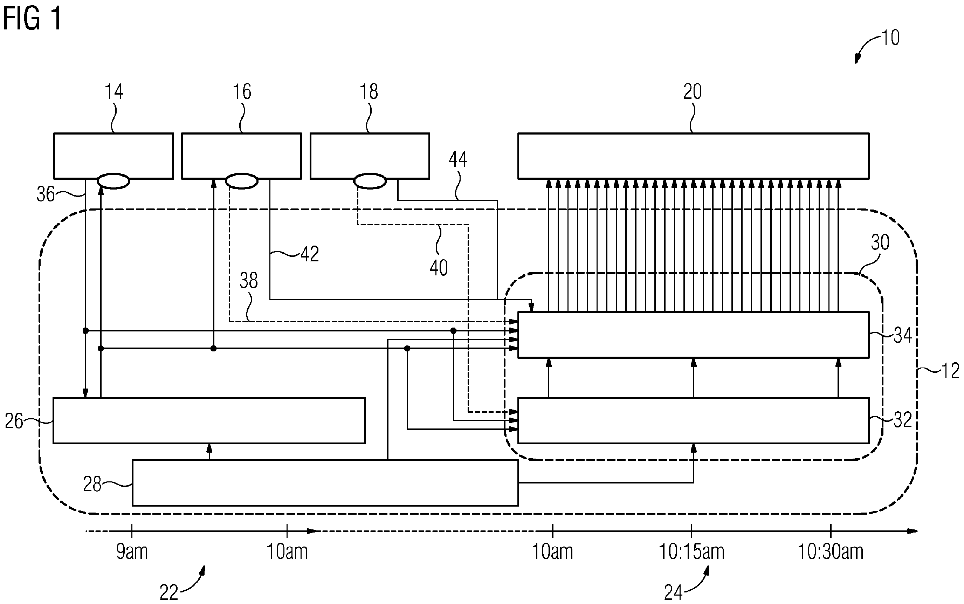

FIG 1 zeigt ein schematisches Interaktionsschema 10, welches Abläufe und funktionale Zusammenhänge zwischen einem Energie-Management-System 12 eines an einem Netzanschlusspunkt an ein Energienetz angeschlossenen Gebäudes und einem Day-Ahead-Markt 14, einem Intraday-Markt 16 und einem Leistungsqualitätsmarkt 18 sowie einer Gebäudeinfrastruktur 20. Neben den funktionellen Zusammenhängen ist auch eine zeitliche Struktur der Abläufe durch eine entsprechende schematisch angedeutete Zeitachse angedeutet. Die Zeitachse ist dabei lediglich schematisch und ausschnittweise und nicht notwendigerweise maßstabsgetreue bezüglich der funktionalen Zusammenhänge dargestellt. Wesentlich ist, dass die Zeitachse zwei Bereiche oder Anteile aufweist, von denen einer einem vorherigen Tag 22 und der andere einem aktuellen Tag 24 zugeordnet ist.

Das Energie-Management-System 12 umfasst vorliegend ein Modul zur Day-Ahead-Planung 26, mittels welchem am vorherigen Tag 22 eine Planung für den aktuellen Tag durchgeführt wird. Geplant wird insbesondere ein Lastgang des Gebäudes an dem Netzanschlusspunkt über den aktuellen Tag 24. Die Day-Ahead-Planung 26 betrifft einen mit Beginn des aktuellen Tages 24 startenden Zeithorizont von 24 Stunden. Dabei können zum Planungszeitpunkt verfügbare Planungsparameter 28 berücksichtigt werden. Diese Planungsparameter 28 können beispielsweise modellbasierte Vorhersagen - beispielsweise für Betriebszustände von Geräten und Anlagen und/oder Komponenten der Gebäudeinfrastruktur 20, oder beispielsweise externer Gegebenheiten wie etwa eines Wettergeschehens - sowie vorgegebene Konfigurationseinstellungen von Geräten, Anlagen, Infrastrukturkomponenten aber auch des Energienetzes und/oder weiterer an das Energienetz angeschlossener Entitäten oder Systeme umfassen. Die Day-Ahead-Planung 26 kann beispielsweise einmal pro Tag durchgeführt werden, da sie erhebliche Ressourcen und Rechenzeit beanspruchen kann.

Die Planungsparameter 28 können regelmäßig oder kontinuierlich dynamisch aktualisiert werden oder bereitstehen und in jeweils aktueller Form auch einem als Teil des Energie-Management-Systems 12 vorgesehenen Moduls 30 zur Bereitstellung von untertägiger Kurzzeitflexibilität während des aktuellen Tages 24 bereitgestellt werden. Dies ist durch entsprechende Pfeile schematisch angedeutet. Das Modul 30 umfasst vorliegend eine Innertages-Neuplanung 32 und ein Lastmanagement 34, welchem jeweilige Ergebnisse der Innertages-Neuplanung 32 bereitgestellt werden. Mittels der Innertages-Neuplanung 32 kann ausgehend von der Day-Ahead-Planung 26 unter Berücksichtigung dann verfügbarer aktueller oder aktualisierter Informationen, wie beispielsweise aktualisierter Planungsparameter 28 und/oder festgestellter Abweichungen zwischen der Day-Ahead-Planung 26 und einem tatsächlichen Betrieb während des aktuellen Tages 24, eine Neubewertung und Neuverplanung von während des aktuellen Tages 24 verfügbaren Ressourcen durchgeführt werden.

Die Innertages-Neuplanung 32 kann beispielsweise regelmäßig wiederholt während des aktuellen Tages 24 durchgeführt werden. Je nach System, Situation und Komplexität kann die Innertages-Neuplanung 32 beispielsweise einmal pro Stunde oder beispielsweise alle 15 Minuten durchgeführt werden. Ein jeweiliger Zeithorizont für die Innertages-Neuplanung 32 kann dabei ein untertägiges Zeitintervall von beispielsweise vier Stunden oder zwölf Stunden oder bis zu 24 Stunden sein, wobei der jeweilige Zeithorizont oder das jeweilige Zeitintervall unmittelbar, das heißt beispielsweise mit Abschluss der entsprechenden Berechnung der Innertages-Neuplanung 32 beginnen kann. Das Lastmanagement 34 kann ebenfalls regelmäßig, beispielsweise jede Minute, durchgeführt werden. Das Lastmanagement 34 kann dabei einen Zeithorizont oder ein Zeitintervall von beispielsweise 30 Minuten oder einer Stunde betreffen, welches ebenfalls unmittelbar, das heißt also beispielsweise mit Abschluss der jeweiligen Berechnung des Lastmanagement 34, beginnen kann. Mittels des Lastmanagements 34 können beispielsweise Steuersignale zur Steuerung der Gebäudeinfrastruktur 20 oder einzelner Infrastrukturkomponenten der Gebäudeinfrastruktur 20 erzeugt und ausgegeben werden.

Die beschriebene Struktur des Interaktionsschemas 10 kann beim Betrieb unterschiedlicher Energienetze oder unterschiedlicher Arten von Energienetzen angewendet oder eingesetzt werden. Vorliegend sollen relevante Zusammenhänge am Beispiel eines Elektrizitätsnetzes beschrieben werden.

Das Energie-Management-System 12 ist hier Teil des Gebäudes, welches beispielsweise ein kommerzielles Großgebäude sein kann. Die Gebäudeinfrastruktur 20 dieses Gebäudes kann als Infrastrukturkomponenten zumindest eine energetische Last, einen Energieerzeuger und einen Energiespeicher aufweisen. Die energetische Last kann etwa ein HVAC-System oder ein an eine entsprechende Ladestation des Gebäudes angeschlossenes Elektroauto sein. Der Energieerzeuger kann beispielsweise ein Blockheizkraftwerk des Gebäudes und/oder eine Photovoltaik- oder Windenergieanlage umfassen. Der Energiespeicher kann beispielsweise eine elektrische Batterie oder ein wiederaufladbarer elektrischer Akkumulator sein. Der Einfachheit halber werden für die vorliegende Betrachtung gegebenenfalls vorhandene oder vorgesehene multiple Komponenten oder Teilkomponenten der energetischen Last, des Energieerzeugers und des Energiespeichers unter diesen Oberbegriffen zusammengefasst. Es wird also vereinfachend beispielsweise von einer beziehungsweise der energetischen Last gesprochen, auch wenn das Gebäude tatsächlich mehrere energetische oder elektrische Lasten aufweist, welche insbesondere auch voneinander unabhängig steuerbar sein können. Entsprechende Steuervorgänge können dann gezielt für jede einzelne Last oder Teillast durchgeführt werden. Entsprechendes gilt für den Energieerzeuger und den Energiespeicher.

Durch die Infrastrukturkomponenten kann eine Leistungsflexibilität gegeben sein. Die Leistungsflexibilität oder Flexibilität gibt an, um welchen Betrag ein Energiebedarf und/oder eine Energieerzeugung des Gebäudes im Vergleich zu einem geplanten nominalen Lastgang oder Betrieb des Gebäudes oder der Gebäudeinfrastruktur 20 gezielt, insbesondere kontrolliert, erhöht und/oder reduziert werden kann. Dabei können technische Restriktionen der einzelnen Infrastrukturkomponenten und/oder des Energienetzes sowie eine oder mehrere zusätzliche Randbedingungen, beispielsweise eine Komfortbedingung für Benutzer des Gebäudes, berücksichtigt werden.

Zumindest ein Teil der Leistungsflexibilität kann durch entsprechende Steuerung der Infrastrukturkomponenten über den Netzanschlusspunkt an die anderen, an das Energienetz angeschlossenen Entitäten bereitgestellt werden. Grundsätzlich ist es vorgesehen, dass mittels der Day-Ahead-Planung 26 ein geplanter nominaler Betriebsplan für zumindest eine der Infrastrukturkomponenten und den bereitzustellenden Teil der Leistungsflexibilität bestimmt und angegeben wird. Mittels der Innertages-Neuplanung 32 wird eine in einem jeweiligen vorgegebenen untertägigen Zeitintervall des aktuellen Tages 24 verfügbare Kurzzeitleistungsflexibilität in Abhängigkeit von dem geplanten nominalen Lastgang des Gebäudes in dem vorgegebenen Zeitintervall und in Abhängigkeit von der bereitzustellenden Leistungsflexibilität bestimmt. Die so ermittelte verfügbare Kurzzeitleistungsflexibilität wird dann an die anderen, an das Energienetz angeschlossenen Entitäten für das vorgegebene Zeitintervall bereitgestellt, sodass sie also von diesen Entitäten abgerufen werden kann.

Dieser Mechanismus kann beispielsweise besonders vorteilhaft für eine Teilnahme des Gebäudes an verschiedenen Energiemärkten mit unterschiedlichen Zeithorizonten eingesetzt werden.

Da das Gebäude also in direktem physischen Kontakt mit dem Energienetz, hier also mit dem Elektrizitätsnetz, steht und an dieses eine Vielzahl weiterer Gebäude, Entitäten und Systeme angeschlossen sein können, ist es vorteilhaft, die Einbettung des Gebäudes in das größere System des Energienetzes zu betrachten. Heutzutage ist die Verteilung von Energie beziehungsweise Elektrizität in den Elektrizitätsnetzen mit einem System von Angebot und Nachfrage auf unterschiedlichen Energiemärkten verknüpft. Dabei gibt es als Teilnehmer beispielsweise überregionale und regionale Netzbetreiber, auf verschiedenen Hierarchieebenen agierende Bilanzkreisverantwortliche, Energieversorger und Endkunden. Vorliegend kann es sich bei dem Endkunden beispielsweise um das Gebäude oder einen Betreiber des Gebäudes handeln. Der Gebäudebetreiber kann beispielsweise einen Vertrag zur Energieversorgung des Gebäudes mit einem frei wählbaren Energieversorger schließen.

Durch die zunehmende Komplexität aber auch die zunehmende Kontrollierbarkeit und Steuerbarkeit elektrischer System, Abhängigkeiten und Interaktionen sowie die Verfügbarkeit von auf Gebäudeebene einsetzbaren steuerbaren energetischen, hier also elektrischen, Lasten, Energieerzeugern und Energiespeichern, kann das Gebäude nunmehr in komplexer Rolle ebenfalls an den verschiedenen, auch zeitlich hierarchisch gegliederten, Energiemärkten teilnehmen.

Prinzipiell gibt es mehrere Möglichkeiten zur Teilnahme an den Energiemärkten. Dabei ist insbesondere eine Unterscheidung zwischen direkter und indirekter Marktteilnahme relevant. An den verschiedenen Energiemärkten sind heutzutage für alle Teilnehmer Mindestbereitstellungs- oder Mindestangebotsmengen festgeschrieben. Es kann dabei die Situation auftreten, dass diese Mindestmengen durch ein einzelnes Gebäude nicht erreicht werden. Aus diesem Grund ist eine direkte Teilnahme des Gebäudes an den Energiemärkten unter den aktuellen Regularien nicht möglich. Es besteht jedoch die Möglichkeit einer indirekten Teilnahme des Gebäudes an den Energiemärkten über einen Aggregator. Dieser Aggregator kann beispielsweise mehrere Gebäude bündeln oder gebündelt verwalten und sicherstellen, dass die notwendigen Mindestmengen gewährleistet werden können. Der Aggregator kann beispielsweise als virtuelles Kraftwerk realisiert sein.

Beispiele für Energiemärkte oder Handelsarten an Energiemärkten sind ein Terminhandel, beispielsweise an der EEX (European Energy Exchange), ein Handel mit so genannter Primär- und/oder Sekundärreserve sowie mit so genannter Minutenreserve, kurzzeitiger Stromgroßhandel über Day-Ahead-Auktionen, beispielsweise an der EPEX (European power Exchange), untertägiger Intraday-Handel, beispielsweise an der EPEX Spot, sowie Day-Ahead-Handel.

Aus Sicht des Gebäudes kann es verschiedene Problemstellungen, Zielsetzungen oder Anreize und Anwendungsfälle bei der Interaktion mit dem Energiemärkten geben. Ein Ziel kann beispielsweise eine Minimierung eines externen Energiebedarfs, das heißt also eines Bedarfs an über den Netzanschlusspunkt aus dem Energienetz bezogener Energie, sein. Hier kann also eine Steuerung der Gebäudeinfrastruktur 20 durch das Energie-Management-System beispielsweise kostenoptimal erfolgen, wofür ein Energiebedarf, eine Energieerzeugung, deren jeweilige zeitliche Verläufe sowie beispielsweise von dem Day-Ahead-Markt 14 bezogene dynamische Preisinformationen 36 berücksichtigt werden können. Hierfür ist insbesondere die Vorhersage eines Lastprofils des Gebäudes, beispielsweise 24 Stunden im Voraus, besonders wichtig und vorteilhaft. Die Berücksichtigung der dynamischen Preisinformationen 36 und die Vorhersage des Gebäudelastprofils können also der Zielsetzung einer Optimierung des Energiebezugs dienen. Insbesondere durch die verfügbare Leistungsflexibilität des Gebäudes oder der Gebäudeinfrastruktur 20 wird eine Teilnahme insbesondere am Ausgleichsenergiemarkt für das Gebäude möglich und vorteilhaft. Das Gebäude oder der Gebäudebetreiber kann hier die jeweils verfügbare Leistungsflexibilität des Gebäudes vermarkten.

Die von dem Gebäude bereitgestellte und auf dem Energiemarkt angebotene Leistungsflexibilität kann beispielsweise von Übertragungsnetzbetreibern (TSO, englisch "Transmission System Operator") genutzt werden, um Leistungsabweichungen in den Übertragungsnetzen auszugleichen. Die Leistungsflexibilität kann auch durch Verteilnetzbetreiber zur Erhöhung der Netzstabilität und/oder durch Energieversorger zur Erhöhung der Bilanzkreistreue verwendet werden. Das Gebäude oder der Gebäudebetreiber selbst kann die Leistungsflexibilität nutzen, um eine möglichst gute Übereinstimmung eines jeweiligen tatsächlichen Lastgangs des Gebäudes mit dem jeweiligen geplanten Lastgang zu erreichen und/oder wie beschrieben an den Energiemärkten teilzunehmen. Neben den technischen Vorteilen, wie beispielsweise einer verbesserten Netzstabilität, können sich so auch wirtschaftliche Vorteile, etwa durch Verkauf von nicht benötigter Leistungsflexibilität und/oder durch Ausnutzung dynamischer Preisentwicklungen, ergeben.

Der jeweilige Bilanzkreisverantwortliche muss eine Prognose hinsichtlich Energieerzeugung und Energieverbrauch für den jeweiligen Folgetag in seinem Bilanzkreis an den jeweiligen zuständigen Übertragungsnetzbetreiber abgeben. Er kann diese Prognose einhalten, indem er beispielsweise eigene Kraftwerke betreibt oder Energie am Markt nach Bedarf einkauft. Dies kann der Bilanzkreisverantwortliche vorteilhaft vermeiden, wenn seine Kunden, zu denen beispielsweise auch das Gebäude oder der Gebäudebetreiber zählen kann, im Bilanzkreis die notwendige Flexibilität zur direkten Verfügung stellen.

Bei der Vermarktung der Leistungsflexibilität ist insbesondere die zeitliche Hierarchie oder der jeweilige zeitliche Horizont des Energiemarktes von Bedeutung. Im Day-Ahead-Handel kann am vorherigen Tag 22 beispielsweise die gemäß der Day-Ahead-Planung 26 am aktuellen Tag 24 geplant oder voraussichtlich verfügbare Leistungsflexibilität des Gebäudes vermarktet werden. So kann beispielsweise eine Minutenreserve wochentäglich bis 10:00 Uhr für den jeweiligen Folgetag ab 0:00 Uhr etwa mit den Netzbetreibern gehandelt werden. Die derart vermarktete Leistungsflexibilität muss für den entsprechenden Zeitraum oder das entsprechende Zeitintervall, für das die jeweilige Leistungsflexibilität angefordert worden ist, technisch bereitgestellt und sichergestellt werden. Dies geschieht durch entsprechende Bestimmung und/oder Anpassung von Sollwerten für die Infrastrukturkomponenten, beispielsweise durch das Lastmanagement 34.

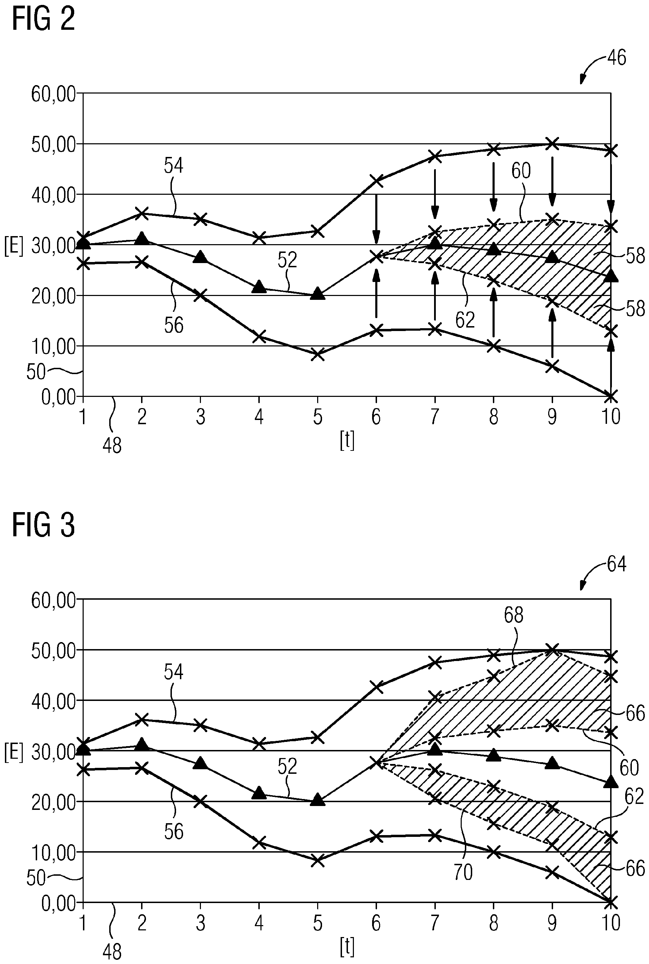

FIG 2 zeigt hierzu beispielhaft ein erstes Diagramm 46, in welchem auf einer Abszisse 48 eine Zeit t in Einheiten von 15 Minuten-Intervallen abgetragen ist und in welchem auf einer Ordinate 50 ein jeweiligen Ladezustand E einer als Energiespeicher des Gebäudes fungierenden Batterie in kWh (Kilowattstunden) angegeben ist. Für das vorliegende Beispiel habe die Batterie eine Kapazität von 50 kWh. Eine mittlere Kurve des ersten Diagramms 46 gibt einen nominalen geplanten Ladezustand 52 der Batterie an, welcher sich beispielsweise aus der Day-Ahead-Planung 26 ergibt. Unter Berücksichtigung eines minimalen Ladezustands der Batterie von 0 kWh und dem maximalen Ladezustand der Batterie von 50 kWh sowie den im Handel an den Energiemärkten vorgegebenen Zeitintervallen ergibt sich eine Leistungsflexibilität der Batterie, welche hier dem Bereich zwischen einer oberen Flexibilitätsgrenze 54 und einer unteren Flexibilitätsgrenze 56 entspricht.

Im dargestellten Beispiel ist im betrachteten Zeitraum bezogen auf den Verlauf des geplanten Ladezustands 52 eine maximale Flexibilität nach oben - entsprechend einem Mehrverbrauch des Gebäudes am Netzanschlusspunkt - von 10 kW sowie eine maximale Flexibilität nach unten - entsprechend einer Verbrauchsreduzierung des Gebäudes am Netzanschlusspunkt - von 9,5 kW gegeben. Dies gilt unter der Annahme, dass die ausgewiesene Flexibilität in jedem Zeitintervall zur Verfügung stehen muss. Wird der maximale Mehrverbrauch von 10 kW tatsächlich abgerufen oder beansprucht, so steigt der tatsächliche Ladezustand der Batterie gegenüber dem geplanten Ladezustand 52 in jedem 15 Minuten-Intervall um 2,5 kWh an. Im vorliegenden Beispiel wäre damit zum Zeitpunkt 9 die maximale Kapazität der Batterie von 50 kWh erreicht. Dementsprechend kann also für den betrachteten Zeitraum eine zusätzliche Leistungsaufnahme oder Flexibilität nach oben von mehr als 10 kW nicht garantiert werden, da es ansonsten zu einer Kollision mit der technisch vorgegebenen Kapazitätsgrenze der Batterie von 50 kWh kommen kann.

Entsprechendes gilt für eine tatsächliche Beanspruchung oder Ausnutzung der Flexibilität nach unten von 9,5 kWh. Hier würde zum Zeitpunkt zehn der minimale Ladezustand der Batterie von 0 kWh erreicht, sodass also dementsprechend nicht mehr Flexibilität nach unten garantiert und vermarktet werden kann.

Beispielhaft sei hier angenommen, dass bis zu einem aktuellen Zeitpunkt sechs keine Leistungsflexibilität der Batterie abgerufen wurde, sodass sie entsprechend dem geplanten Ladezustand 52 betrieben wird. Zum aktuellen Zeitpunkt sechs ist die Batterie also mit etwa 27 kWh geladen. Ausgehend vom Zeitpunkt sechs ist hier eine bereits am Vortag vermarktete Leistungsflexibilität 58 gekennzeichnet, welche hier einem um den geplanten Ladezustand 52 zentrierten Bereich zwischen jeweiligen Begrenzungskurven 60, 62 entspricht. Da die bereits vermarktete Leistungsflexibilität 58 in dem Zeitintervall zwischen den Zeitpunkten sechs und zehn garantiert bereitgestellt werden muss, reduziert sich die übrige verfügbare Leistungsflexibilität der Batterie um den entsprechenden Betrag.

Es kann nun die Situation auftreten, dass - wie in FIG 2 gezeigt - nicht die gesamte verfügbare Leistungsflexibilität des Gebäudes, hier insbesondere der Batterie, bereits am vorherigen Tag 22 erfolgreich vermarktet werden kann oder vermarktet worden ist. Auf Basis des Day-Ahead-Handels bleibt der nicht vermarktete Anteil der verfügbaren Leistungsflexibilität somit ungenutzt. Durch einen Wechsel des Betrachtungszeitraums oder der betrachteten Zeitskala steht dieser Anteil jedoch für den Intraday-Handel während des aktuellen Tages 24 zur Verfügung. Dies kann auch einen nicht beanspruchten oder abgerufenen Anteil der bereits am Vortag vermarkteten Leistungsflexibilität 58 betreffen oder umfassen. Auf dem Intraday-Markt 16 können beispielsweise die an das Energienetz angeschlossenen Energieversorger Versorger-Flexibilitätsanforderungen 38 über eine entsprechende Kommunikationsschnittstelle an das Gebäude senden. In entsprechender Art und Weise können beispielsweise auch auf dem Leistungsqualitätsmarkt 18 jeweilige Verteilnetzbetreiber (DSO, englisch "Distribution System Operator") entsprechende DSO-Flexibilitätsanforderungen 40 an das Gebäude senden. Die Flexibilitätsanforderungen 38, 40 werden an das Modul 30 zur Bereitstellung der angeforderten untertägigen Kurzzeitleistungsflexibilität geleitet und bei der Innertages-Planung 32 sowie vom Lastmanagement 34 berücksichtigt. Da auch auf Seiten der Energieversorger und/oder der DSOs ein jeweiliger Leistungs- oder Flexibilitätsbedarf dynamisch und kurzfristig variieren kann, können dementsprechend auch Versorger-Flexibilitätsfreigaben 42 beziehungsweise DSO-Flexibilitätsfreigaben 44 an das Gebäude gesendet werden. Dadurch kann also der tatsächliche Bedarf an Kurzzeitflexibilität variieren, und freigegebene Kontingente können gegebenenfalls innerhalb des aktuellen Tages 24 erneut vermarktet werden. Sowohl die Anforderungen 38, 40 als auch die Freigaben 42, 44 können durch das Lastmanagement 34 berücksichtigt und verwertet werden, um die entsprechenden Sollwerte oder zur Erreichung der entsprechenden Sollwerte notwendige Steuersignale für die Infrastrukturkomponenten anzupassen, zu erzeugen oder zu generieren.

FIG 3 zeigt ein zweites Diagramm 64, welches in seinem Aufbau und den gemachten Annahmen dem ersten Diagramm 46 entspricht. In dem zweiten Diagramm 64 ist eine ab dem aktuellen Zeitpunkt sechs verfügbare untertägige Kurzzeitleistungsflexibilität 66 gekennzeichnet. Diese teilt sich auf in einen Bereich zwischen der Begrenzungskurve 60 der bereits vermarkteten Leistungsflexibilität 58 und einer Begrenzungskurve 68 einerseits sowie einen Bereich unterhalb der Begrenzungskurve 62 der bereits vermarkteten Leistungsflexibilität 58 und einer Begrenzungskurve 70 andererseits. Auch hier ergibt sich ein Betrag der verfügbaren untertägigen Kurzzeitleistungsflexibilität 66 daraus, dass die Begrenzungskurven 68, 70 höchstens die obere Flexibilitätsgrenze 54 beziehungsweise die untere Flexibilitätsgrenze 56 erreichen dürfen. Die verfügbare untertägige Kurzzeitleistungsflexibilität 66 kann also zunächst einmal bereits im Rahmen der Day-Ahead-Planung 26 und erneut im Rahmen der Innertages-Neuplanung 32 bestimmt und vermarktet werden. Die verfügbare untertägige Kurzzeitleistungsflexibilität 66 stellt in diesem Sinne zusätzliche Flexibilität dar, die erst durch den Wechsel des Betrachtungszeitraumes nutzbar wird. Dabei ist zu beachten, dass diese zusätzliche verfügbare untertägige Kurzzeitleistungsflexibilität 66 unabhängig davon entsteht, ob in den dem aktuellen Zeitpunkt sechs vorgelagerten Zeitintervallen eins bis fünf positive oder negative Leistungsflexibilität abgerufen wurde oder nicht.

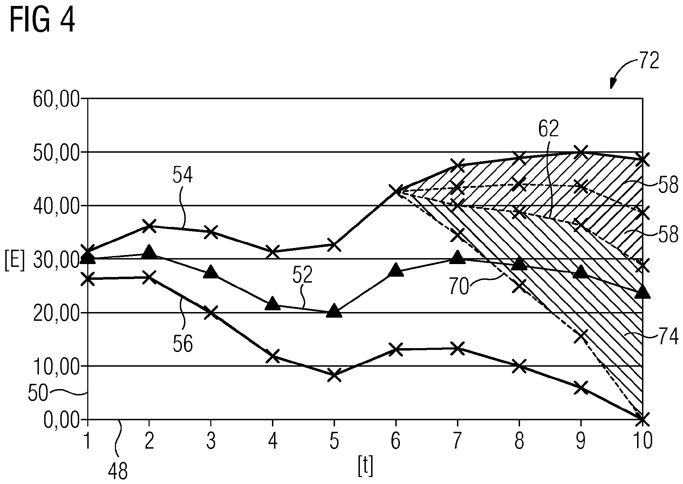

Hierzu zeigt FIG 4 ein drittes Diagramm 72, welches in seinem Aufbau den Diagrammen 46 und 64 entspricht. Hier ist zum aktuellen Zeitpunkt sechs durch vorherigen Abruf von Leistungsflexibilität bereits eine Abweichung des tatsächlichen Ladezustandes der Batterie von dem geplanten Ladezustand 52 derart gegeben, dass die obere Flexibilitätsgrenze 54 erreicht ist. Auch in diesem Fall steht die bereits vermarktete Leistungsflexibilität 58 entsprechend den in dem ersten Diagramm 46 und in dem zweiten Diagramm 64 gezeigten Betrag zur Verfügung. Anders als in dem zweiten Diagramm 64 ist bei dem in dem dritten Diagramm 72 gezeigten Beispiel jedoch zwischen den Zeitpunkten sechs und zehn lediglich eine verfügbare untertägige Kurzzeitleistungsflexibilität 74 nach unten gegeben. Diese kann dabei allerdings von ihrem Betrag her größer ausfallen als jeder einzelne der beiden Teilbereiche der in dem zweiten Diagramm 64 gekennzeichneten verfügbaren untertägigen Kurzzeitleistungsflexibilität 66 für sich genommen.

Eine jeweilige Entscheidung, wie die jeweils verfügbare untertägige Kurzzeitleistungsflexibilität 66, 74 vermarktet werden soll - beispielsweise am Intraday-Markt 16, in einem Bilanzkreismanagement, auf dem Leistungsqualitätsmarkt 18, in einem Verteilnetz oder in einer beliebigen Kombination hieraus - kann automatisch oder selbsttätig durch das Energie-Management-System 12, insbesondere durch das Modul 30 entschieden werden.

Insgesamt ergeben sich in dem betrachteten Szenario die Problemstellungen, erstens eine Leistungsflexibilität für zukünftige lokale Netzdienstleistungsmärkte zur Beseitigung von Engpässen im Verteilnetz bereitzustellen, zweitens eine Leistungsflexibilität zum Bilanzkreismanagement, beispielsweise durch bilaterale Verträge zwischen dem Gebäude oder Gebäudebetreiber und einem jeweiligen Energieversorger, bereitzustellen und drittens eine Kurzzeitleistungsflexibilität zur Teilnahme des Gebäudes an untertägig handelnden Energiemärkten bereitzustellen. Bei jeder dieser Problemstellungen muss kurzfristig, das heißt untertägig am selben aktuellen Tag 24 Kurzzeitleistungsflexibilität ermittelt, vermarktet und bereitgestellt werden, was eine gegenüber bekannten Day-Ahead-Märkten veränderte Betrachtungs- und Herangehensweise erfordert. Das beschriebene Energie-Management-System 12 mit dem Modul 30 zur Bereitstellung von untertägiger Kurzzeitleistungsflexibilität ist in der Lage, gleichzeitig an verschiedenen Energiemärkten, welche insbesondere auf verschiedenen Zeitskalen agieren, teilzunehmen beziehungsweise die jeweils verfügbare Flexibilität gleichzeitig unterschiedlichen externen Systemen anzubieten und bereitzustellen. Dies betrifft insbesondere den Regelenergiemarkt für Day-Ahead Leistungsflexibilität einerseits und den Intraday-Markt 16, das Bilanzkreismanagement sowie mögliche Netzdienstleistungsmärkte auf Verteilnetzebene für untertägige Kurzzeitleistungsflexibilität andererseits. Durch das Energie-Management- System 12 und insbesondere durch das Modul 30 kann der Eigenverbrauch von selbsterzeugter Energie des Gebäudes in Kombination mit dem zum Betrieb des Gebäudes notwendigen Energieeinkauf optimiert werden. Zusätzlich kann tageweise oder untertägig verfügbare Leistungsflexibilität beziehungsweise Kurzzeitleistungsflexibilität des Gebäudes an verschiedene externe Teilnehmer vermarktet werden.

## Patentansprüche

1. Verfahren zum Betrieb eines Energie-Management-Systems (12) eines an einem Netzanschlusspunkt an ein Energienetz angeschlossenen Gebäudes, welches als Infrastrukturkomponenten (20) zumindest eine energetische Last, einen Energieerzeuger und einen Energiespeicher aufweist, wobei durch die Infrastrukturkomponenten eine Leistungsflexibilität gegeben ist und zumindest ein Teil (58) der Leistungsflexibilität durch entsprechende Steuerung der Infrastrukturkomponenten (20) über den Netzanschlusspunkt an andere, an das Energienetz angeschlossene Entitäten (14) bereitgestellt wird, **gekennzeichnet durch** die Verfahrensschritte
- Empfangen von Eingangsdaten, welche einen geplanten nominalen Lastgang (52) des Gebäudes an dem Netzanschlusspunkt, einen geplanten nominalen Betriebsplan (52) für zumindest eine der Infrastrukturkomponenten (20) und den bereitzustellenden Teil (58) der Leistungsflexibilität angeben,
- Bestimmen zumindest einer in einem vorgegebenen untertägigen Zeitintervall eines jeweils aktuellen Tages verfügbaren Kurzzeitleistungsflexibilität (66, 74) in Abhängigkeit von dem geplanten nominalen Lastgang (52) des Gebäudes in dem vorgegebenen Zeitintervall und der bereitzustellenden Leistungsflexibilität (58),
- Bereitstellen der bestimmten verfügbaren Kurzzeitleistungsflexibilität (66, 74) an andere, an das Energienetz angeschlossene Entitäten (16, 18) für das vorgegebene Zeitintervall.

2. Verfahren nach Anspruch 1,
**dadurch gekennzeichnet, dass**
zum Bereitstellen der Leistungsflexibilität (58) und/oder der Kurzzeitleistungsflexibilität (66, 74) eine steuerbare Last des Gebäudes gesteuert wird in Abhängigkeit von zumindest einer Komfortbedingung.

3. Verfahren nach Anspruch 2,
**dadurch gekennzeichnet, dass**
die steuerbare Last eine klimatechnische Einrichtung umfasst und als Komfortbedingung ein Halten einer Temperatur und/oder Luftfeuchtigkeit und/oder einer Luftqualität in einem Bereich des Gebäudes innerhalb eines vorgegebenen Werteintervalls dient.

4. Verfahren nach einem der vorhergehenden Ansprüche,
**dadurch gekennzeichnet, dass**
die verfügbare Kurzzeitleistungsflexibilität (66, 74) an einen Aggregator bereitgestellt wird, der jeweilige verfügbare Kurzzeitleistungsflexibilitäten mehrerer an das Energienetz angeschlossener Gebäude bündelt.

5. Verfahren nach einem der vorhergehenden Ansprüche,
**dadurch gekennzeichnet, dass**
die verfügbare Kurzzeitleistungsflexibilität (66, 74) mittels eines physikalischen und/oder datengestützten Modells zumindest einer, bevorzugt mehrerer oder aller, der Infrastrukturkomponenten (20) des Gebäudes bestimmt wird.

6. Verfahren nach einem der vorhergehenden Ansprüche,
**dadurch gekennzeichnet, dass**
zur Bestimmung der verfügbaren Kurzzeitleistungsflexibilität (66, 74)
- ein nicht in Anspruch genommener Anteil der bereitgestellten Leistungsflexibilität (58) berücksichtigt wird und/oder
- zumindest ein Betriebsparameter zumindest einer Infrastrukturkomponente (20) gemessen und eine Abweichung zwischen dem entsprechenden Messwert und einem jeweiligen gemäß dem geplanten nominalen Betriebsplan (52) erwarteten Wert berücksichtigt wird.

7. Verfahren nach einem der vorhergehenden Ansprüche,
**dadurch gekennzeichnet, dass**
das Gebäude zumindest eine, bevorzugt mehrere, steuerbare Infrastrukturkomponenten umfasst und die Leistungsflexibilität (58) und/oder die Kurzzeitleistungsflexibilität (66, 74) zumindest für jede steuerbare Infrastrukturkomponente individuell bestimmt wird.

8. Verfahren nach einem der vorhergehenden Ansprüche,
**dadurch gekennzeichnet, dass**
die Leistungsflexibilität (58) und/oder die Kurzzeitleistungsflexibilität (66, 74) über ein als das Energienetz fungierendes Verteilnetz für Elektrizität und/oder Wärme und/oder Kälte und/oder Dampf und/oder Druckluft und/der Gas bereitgestellt wird.

9. Energie-Management-System (12) für ein an ein Energienetz angeschlossenes Gebäude, mit einer Datenverarbeitungseinrichtung, welche eine Datenschnittstelle zum Empfang von Eingangsdaten und zum Ausgeben von Steuersignalen an zumindest eine Infrastrukturkomponente (20) des Gebäudes aufweist, wobei das Energie-Management-System (12) zum Durchführen eines Verfahrens gemäß einem der Ansprüche 1 bis 8 eingerichtet ist.
